(19) **Europäisches Patentamt**
**European Patent Office**
**Office européen des brevets**

(11) **EP 1 618 758 B1**

(12) **EUROPEAN PATENT SPECIFICATION**

(45) Date of publication and mention
of the grant of the patent:
**12.12.2007 Bulletin 2007/50**

(51) Int Cl.:
***H04Q 7/32*** *(2006.01)*          ***H04B 7/26*** *(2006.01)*

(21) Application number: **04729229.7**

(86) International application number:
**PCT/JP2004/005869**

(22) Date of filing: **23.04.2004**

(87) International publication number:
**WO 2004/095870 (04.11.2004 Gazette 2004/45)**

(54) **METHOD OF TIME AND FREQUENCY SYNCHRONIZATION OF A MULTIMODE TERMINAL**

VERFAHREN ZUR ZEIT- UND FREQUENZ-SYNCHRONISATION EINES
MULTIMODUSENDGERÄTS

PROCEDE DE SYNCHRONISATION TEMPORELLE ET FREQUENTIELLE D'UN TERMINAL
MULTIMODE

(84) Designated Contracting States:
**DE GB IT**

(30) Priority: **24.04.2003 FR 0350128**

(43) Date of publication of application:
**25.01.2006 Bulletin 2006/04**

(73) Proprietor: **NEC CORPORATION**
**Minato-ku,**
**Tokyo 108-8001 (JP)**

(72) Inventor: **SANCHEZ, Javier**
**F-92500-Rueil-Malmaison (FR)**

(74) Representative: **Betten & Resch**
**Patentanwälte**
**Theatinerstrasse 8**
**80333 München (DE)**

(56) References cited:
**EP-A- 1 073 303**          **EP-A- 1 303 152**
**WO-A-02/01902**          **FR-A- 2 826 813**
**FR-A- 2 826 825**          **US-B1- 6 424 637**

**EP 1 618 758 B1**

**Description**

Technical Field:

The invention is in the field of time and frequency synchronization of a multimode terminal with at least two different base stations. More specifically, the present invention relates to a method and a device for time-synchronizing at least two radio access modules of a multimode communication terminal capable of functioning according to at least two distinct radio access techniques in a cellular telecommunication network in which one of the radio access module is active in the current cell and the other radio access module is in a passive state in the current cell.

The invention applies to a multimode terminal such as, for example, a GSM/UMTS (Global System for Mobile Communications, and Universal Mobile Telecommunications System, respectively) dual-mode terminal.

Background Art:

Currently GSM is the mobile telephone system of reference in Europe and in the world. In order to ensure its evolution towards the third generation, ISO (International Organization for Standardization) has proposed UMTS. Technical specifications of UMTS are developed under a partnership called 3GPP (Third Generation Partnership Project). One thing desired in the process of standardizing UMTS was to ensure its interoperability with GSM. Thus, a specific classification describing four types of dual-mode GSM/UMTS terminals, Type 1, Type 2, Type 3, and Type 4 was established.

For terminals of Type 1, when a terminal is located in a GSM radio network or in a UTRA (Universal Terrestrial Radio Access) radio network, the "inactive" radio part of the terminal (UTRA or GSM) does not perform any measurement of reception quality, with the implication that transition from one mode to the other can only be made with intervention of the user.

For terminals of Type 2, when a mobile terminal is connected to a GSM radio network or to a UMTS radio network, the inactive radio part of the terminal (UTRA or GSM) may perform measurements in order to switch automatically to the network that provides the better reception quality.

Terminals of Type 3 are different from those of Type 2 in that they further provide the possibility of receiving information simultaneously in both modes. On the other hand, simultaneous transmission in both modes is not possible. As with terminals of Type 2, transition from one radio network to another is performed automatically.

For terminals of Type 4, transition from one radio network to another is performed automatically, and information may be received and transmitted simultaneously over the two networks.

The present invention finds applications in terminals of Type 2 as well as in those of Type 1. Note that among the four types of terminals of this classification, it is the dual-mode terminals of Type 2 that allow the operators to make current investments in GSM profitable, taking advantage of the existing coverage while familiarizing their subscribers with new services provided by UMTS.

At the level of functional architecture, a Type 2 terminal comprises an electronic card responsible for performing tasks specific to GSM and an electronic card that performs tasks specific to UMTS. In this type of terminal, at a given moment, one card is necessarily active and the other is inactive. Consequently, at that moment, only communication with the network associated with the active card (GSM or UMTS) is possible. The inactive card can only perform measurements on neighboring cells belonging to the other radio access network (GSM or UMTS). The measurements possibly serve for switching automatically from a GSM network to a UMTS network and vice-versa.

Recall that in a single-mode terminal (GSM or UMTS), in order to avoid relative frequency error between the reference clock in the electronic card (GSM or UMTS) and the clock of the base station of the network (GSM or UMTS), it is necessary for the terminal to be synchronized with the associated network in time and frequency to be able to decode and then demodulate information coming from the base station. This error may have several causes among which are variations of temperature or even aging of components of the terminal.

In order to compensate for this error, a very common technique used in the prior art called AFC (Automatic Frequency Control) consists in ensuring frequency synchronization with the current base station to be as precise as possible with the aid of a closed loop that is slaved to a reference frequency value. The loop is supplied with estimations of frequency errors measured on the downlink channels that the mobile is listening to.

In FR-A-2 826 825, a method of switching from a first mobile radio mode to a second mobile radio mode in a multimode mobile radio terminal having a first part and a second part respectively operating in compliance with first and second radio access technologies and respectively provided with first and second clocks is disclosed.

In FR-A-2 826 813, a method of estimating the relative frequency uncertainty between two parts of a mobile radio system able to communicate via two mobile radio networks at first and second particular frequencies is disclosed, wherein each part of the mobile radio system has a clock from which the particular frequency is derived and the uncertainty is estimated by measuring the number of pulses of each of the clocks during a time window of duration T starting at a time t.

The object of the invention is to update the time base of the passive radio access module with respect to that of the active radio access module. The time base defines a whole set of counters of time-measuring units used In each radio access technology.

Another object of the invention is to optimize the autonomy of the mobile terminal by maintaining one of the radio access modules in the "sleep" state as much as possible while preserving its synchronization with the network by means of the active radio access module. This should allow the inactive radio access module to perform measurements on neighboring cells of the same radio technique in time windows allocated by the current radio network.

Disclosure of the Invention:

The present invention proposes a method of time synchronization of radio access modules of a multimode communication terminal capable to communicate with base stations of a cellular telecommunication network via a plurality of distinct radio access networks, each based on at least a first radio access technique and a second radio access technique different from the first radio access technique, one of the radio access modules being active in a cell of the network called current cell, while the other radio access modules being passive in that cell as defined in claim 1.

The method according to the invention may further comprise a step consisting in activating the passive radio access module from the active radio access module when measurements of power should be performed by the passive radio access module.

The method according to the invention may further comprise a step consisting in updating the value of the offset $T_{offset}$ on each change of the current cell.

According to a preferred embodiment of the invention, the mobile terminal is a UMTS/GSM dual-mode terminal and the predefined duration $T_{offset}$ is the time difference observed on a GSM cell defined in the standard 3GPP TS 25.215.

The invention thus makes it possible to take advantage of the measurement specified in the UMTS standard called "Observed time difference to a GSM cell" or "OTD." This measurement is used by the UMTS network for placing in time sequence compressed frames used for performing measurements of power on GSM cells. It represents the time offset between the start of the UMTS superframe of the current cell having a size of 4096 frames of 10 ms and the start of a GSM multiframe of a neighboring GSM cell having 51 frames of 4.615 ms.

Typically, this measurement is performed upon request from the network. However, within the present invention, the "observed time difference to a GSM cell" will be measured as needed by the terminal.

According to the invention, activation of the passive radio access module may be performed just before performing measurements on neighboring cells of the current cell.

The invention also relates to a device designed to implement the method according to the invention as defined in claim 4.

The invention also relates to a multimode mobile terminal as defined in claim 5.

According to the invention, the central interface may comprise a module for generating an order for activating the passive radio access module.

Brief Description of the Drawings:

Other characteristics and advantages of the invention will be apparent from the following description, taken by way of non-limiting example, with reference to accompanying drawings in which:

FIG. 1 schematically represents a device designed to implement the method according to the invention;
FIG. 2 schematically represents a particular embodiment of the unit for calculating the difference of time observed in a GMS cell defined in the standard 3GPP TS 25.215;
FIG. 3 represents a timing chart allowing to schematize the time offset perceived by the mobile terminal between the starts of the UMTS superframe having a size of 4096 frames and the start of the GSM multiframe having 51 frames; and
FIG. 4 schematically shows the way in which the passive radio access module (GSM) is awaken by the active radio access module (UTRA) for the purpose of examining neighboring GSM cells.

Best Mode for Carrying Out the Invention:

The invention will now be described in an application in a UMTS/GSM dual-mode mobile terminal set to a UMTS cell by way of example. Thus, the active radio access module is UTRAN (Universal Terrestrial Radio Access Network or UMTS Terrestrial Radio Access Network), and the passive radio module is that of the GSM system.

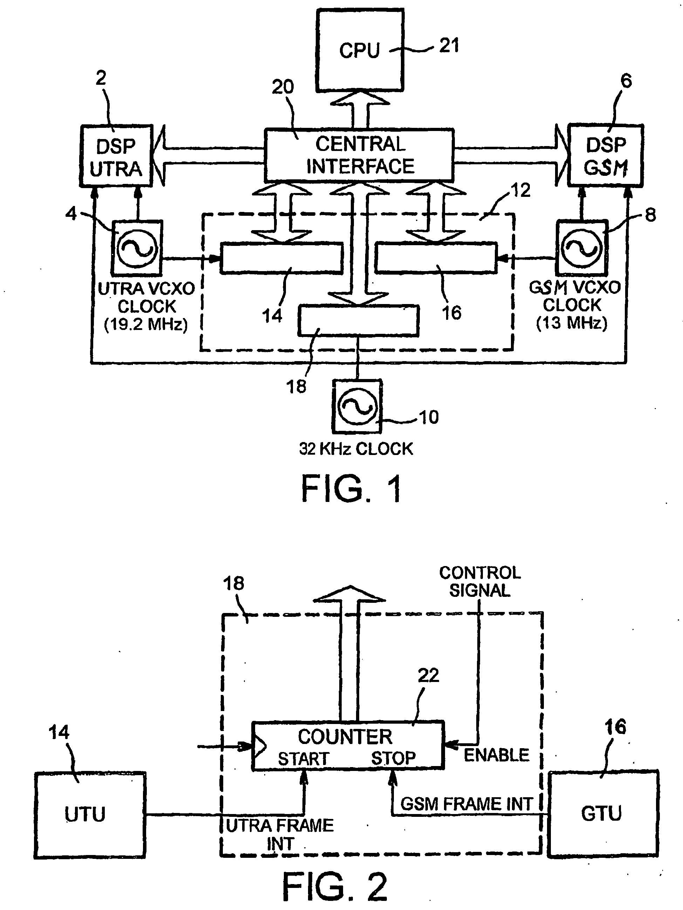

In FIG. 1, a device for time-synchronizing UTRAN and GSM is shown. The device comprises: a UTRA radio access module 2 connected to a clock 4 of 19.2 MHz; a GSM radio access module 6 connected to a clock 8 of 13 MHz;

and a time base module and generator 12 comprising a first unit 14 designed to maintain the clock signal of the UTRA module 2, a second unit 16 designed to maintain the clock signal of the GSM module 6, and a unit 18 for calculating the duration $T_{offset}$ representing the difference of time observed on GSM defined in the standard 3GPP TS 25.215.

Each of elements described above is connected to a central interface 20 programmed for generating a clock signal calculated from the 19.2 MHz UTRA clock signal, the 13 MHz GSM clock signal, and the time offset $T_{offset}$. The central interface 20 is further connected to the central processing unit (CPU) 21 of the mobile terminal. The device is further provided with a clock 10 of 32 KHz and the clock signal of 32 KHz is supplied to the UTRA module 2, GSM module 6 and time base generator 12.

With reference to FIG. 2, the calculation unit 18 comprises a counter 22 connected to the first unit 14 and the second unit 16, and receives from the central interface 20 a command signal to start the counting at the start of the UMTS superframe of the current UMTS cell having a size of 4096 frames to the start of a GSM multiframe of a neighboring GSM cell having 51 frames.

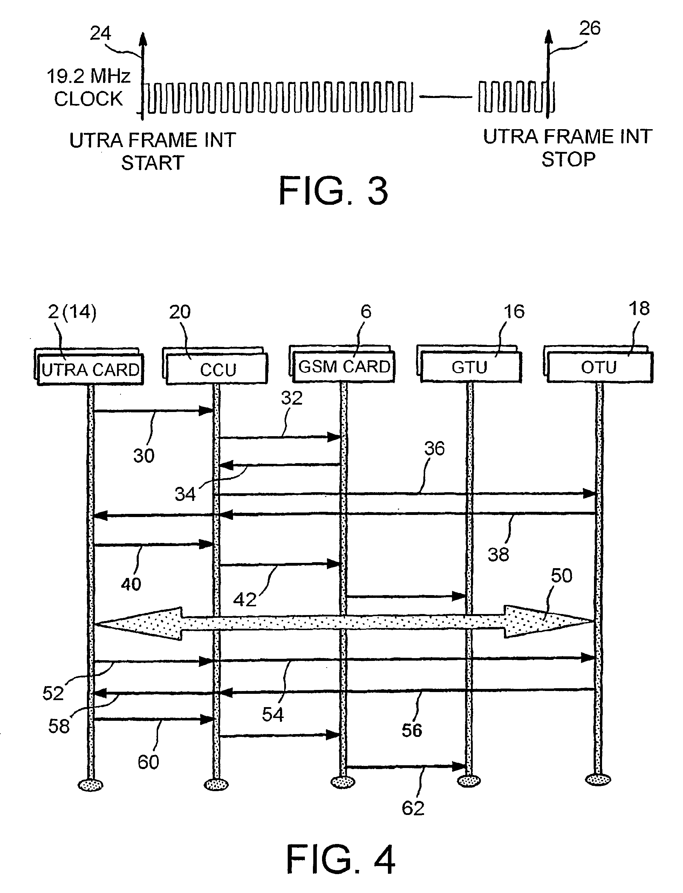

In FIG. 3, the start of the UMTS superframe is illustrated by arrow 24, and the start of the GSM multiframe of a neighboring GSM cell having 51 frames is illustrated by arrow 26.

Note that the measurement of the duration $T_{offset}$ is performed only once at the moment the mobile terminal is set to the cell for the first time, and then updated regularly according to the technique described in the following paragraphs. This measurement will have to be performed again if the active cell changes, or if a new GSM cell appears in the radio environment of the mobile. Also this measurement has to be carried out for each GSM cell adjacent to the active UTRAN cell. The estimated duration $T_{offset}$ will be used for updating the time base of the passive radio access module with respect to the active radio access cell and this is done for each neighboring GSM cell.

The time base is defined here as a set of counters of time measurement units used in each radio access technique. For example, in GSM, it is necessary to keep updated the counts of symbols, slots, frames, and multiframes. These counters constitute the GSM timing unit (GTU) in FIG. 1. Similarly, in UMTS, it is necessary to keep the counts of time measurement units of the information transmitted in the current cell. These measurement units are chips, slots, and frames.

The following expression allows for updating the GSM time base from the UMTS time base from the measurement of $T_{offset}$:

$$GSM\_Time = \left[ (UTRA\_fn \times 10) + \left( UTRA\_sn \times \frac{10}{15} \right) + \left( UTRA\_cn \times \frac{10}{38400} \right) - T_{offset} \right]$$

where UTRA_fn represents the value of the frame counter, UTRA_sn represents the value of the slot counter, and UTRA_cn represents the value of the chip counter in UMTS.

The value of GSM_Time is then used to estimate the corresponding values of a superframe, a frame, a slot and a quarter of GSM bit according to the following expressions:

$$GSM\_sfn = INT \left[ \frac{GSM\_Time}{(3060/13)} \right]$$

$$GSM\_fn = INT \left[ \frac{GSM\_Time}{(60/13)} \right] MOD(51)$$

$$GSM\_sn = INT \left[ \frac{GSM\_Time}{(15/26)} \right] MOD(8)$$

$$GSM\_qb = INT \left[ \frac{GSM\_Time}{(15/16250)} \right] MOD(625)$$

Similarly and given that a GSM frame amounts to 60/13 ms, and that a GSM slot amounts to 15/26 ms and that a quarter of a GSM bit is 15/16250 ms, UMTS base time may be obtained from the GSM base time according to the following expression:

$$UTRA\_Time = \left[ \left( GSM\_fn \times \frac{60}{13} \right) + \left( GSM\_sn \times \frac{15}{26} \right) + \left( GSM\_qb \times \frac{16}{16250} \right) + \left( N \times 51 \times \frac{60}{13} \right) + T_{offset} \right]$$

where GSM_fn, GSM_sn and GSM_qb represent the number of frames, slots, and quarter GSM bits respectively. Thus, we have:

$$UTRA\_fn = INT \left[ \frac{UTRA\_time}{10} \right] MOD(4096)$$

$$UTRA\_sn = INT \left[ \frac{UTRA\_Time}{(10/15)} \right] MOD(15)$$

$$UTRA\_chip = INT \left[ \frac{UTRA\_Time}{(10/38400)} \right] MOD(2560)$$

In operation, the UMTS radio part performs the measurement $T_{offset}$ as specified by the recommendation 3GPP TS 25.215 with the aid of the device represented in FIG. 2. The databases containing time measurement units 14 and 16 described above are initialized with the measurement $T_{offset}$.

An exemplary application of the invention is as follows: When the mobile terminal is synchronized with a UMTS cell and the mobile terminal is communicating with the network in a dedicated channel, spots are allocated by the network to the mobile where measurements on GSM cells are to be performed. Then it is necessary for the GSM RAT (radio access technology) to know exactly the start and the end of these spots. For this, the UMTS time is converted into GSM time according to the expressions described above in order to achieve the synchronization and then to synchronize the two GSM and UMTS radio cards so as to know the exact time to awaken the GSM card while allowing the card to remain synchronized with respective GSM cells.

Note that, by virtue of the invention, it is not necessary to perform the measurement $T_{offset}$ systematically. In fact, once the value $T_{offset}$ is measured for the first time as specified by the recommendation 3GPP TS 25.215, the fact that the active radio access module always maintains time synchronization with the network of the active cell is advantageously used. Thus thereafter it is only necessary to measure the time offset $T_{offset}$ internally between the active radio access module and the passive radio access module without intervention of signals received from the GSM and UTRAN network. The device in FIG. 2 is used again for this purpose.

Thus, the value $T_{offset}$ is estimated by means of the counter 22 that is supplied with UMTS and GSM frame timing signals. The start of the counting is activated by the UMTS frame timing signal and the end of the counting is controlled by the GSM frame timing signal at the end of a period defined by the manufacturer of the terminals (a few milliseconds). The precision of the measurement is determined by the 19.2 MHz clock. Once the counter is stopped, the difference of time $T_{offset}$ between the two RAT will be obtained in number of cycles of 19.2 MHz clock. The counter is activated by an external signal that may be generated by the microprocessor of the system.

With reference to FIG. 4, at step 30, the first unit 14 sends to the central interface 20 a request for activating the passive radio access module 6. The central interface 20 transmits this request to the passive module 6 at step 32. Upon receiving this request, the passive radio access module 6 sends to the central interface 20 a synchronization demand at step 34. The central interface 20 triggers the calculation of the time offset $T_{diff}$ by the calculation unit 18 at step 36. The result of this calculation is then transmitted at step 38 to the central interface 20, which transmits it to the first unit 14. The unit 14 generates the synchronization signal GSM_Time for estimating the corresponding values of a superframe, a frame, a slot and a quarter GSM bit. The synchronization signal GSM_Time is then transmitted to the central interface 20 at step 40, which transmits it at step 42 to the second unit 16 designed to maintain the clock signal of the GSM module.

Once the two radio access modules are synchronized by means of the signal GSM_Time, the intersystem measurement may be carried out at step 50.

At the time a cell change, the time $T_{offset}$ is transmitted at step 52 to the central interface 20, which transmits it at step 54 to the calculation unit 18. Upon receiving the value of $T_{offset}$, the calculation unit 18 performs updating of the $T_{offset}$ and sends back at step 56 the result of the updating to the central interface 20, which transmits it at step 58 to the first unit 14. The first unit 14 recalculates the synchronization signal GSM_Time and transmits it at step 60 to the central interface 20, which transmits it at step 62 to the second unit 16.

**Claims**

1. A method for time-synchronization of at least two radio access modules (2, 6) of a multimode communication mobile terminal capable to function according to at least two distinct radio access techniques in a cellular telecommunication network in which one of said radio access modules is active in a current cell and the other radio access module is in a passive state in said current cell, said method comprising steps of:

   (a) measuring for each of cells adjacent to the current cell a time offset $T_{offset}$ between start of a specific frame of the first readio technique and start of a specific frame of the second radio access technique; and
   (b) using the time offset $T_{offset}$ measured in step (a) for synchronizing the passive radio access module with the active radio access module, **characterized in that** said method further comprises a step of activating the passive radio access module from the active radio access module,

   wherein the activation of the passive access module is made immediately before the measurements on cells adjacent to the current cell.

2. The method according to claim 1, comprising a step of updating a value of the offset $T_{offset}$ on each change of the current cell and for each neighboring cell associated with the radio access technique of the passive module.

3. The method according to claim 1 or 2, wherein the mobile terminal is UMTS/GSM dual-mode terminal and wherein the predefined duration $T_{offset}$ is a time difference observed on a GSM cell.

4. A device for time-synchronizing at least two radio access modules (2, 6) of a multimode communication mobile terminal capable to function according to at least two distinct radio access techniques in a cellular telecommunication network in which one of said radio access modules is active in a current cell and the other radio access module is in a passive state in said current cell, said device comprising:

   means for measuring a time offset $T_{offset}$ between start of a specific frame of the first radio technique and start of a specific frame of the second radio access technique; and
   means for synchronizing the passive radio access module with the active radio access module using the time offset $T_{offset}$,

   **characterized in that** the active radio access module is adapted to activate the passive radio access module, wherein the activation of the passive access module is made immediately before the measurements on cells adjacent to the current cell.

5. A multimode communication mobile terminal comprising:

   a radio access module (2, 6) dedicated to each operating mode;
   a clock generator (4, 8) associated with each radio access module; and
   a unit (18) for calculating a time offset $T_{offset}$ between start of a specific frame of a first operating mode and start of a specific frame of a second operating mode in a cellular telecommunication network,

   wherein said mobile terminal comprises a central interface (20) capable to generate a clock signal of a passive radio access module shifted with respect to a clock signal of an active radio access module concerning said duration $T_{offset}$, **characterized in that** the active radio access module is adapted to activate the passive radio access module via the central interface and wherein the activation of the passive access module is made immediately before calculating the time offset $T_{offset}$.

**6.** The mobile terminal according to claim 5, wherein said central interface comprises a module for generating an order for activating the passive radio access module.

**7.** The mobile terminal according to claim 5 or 6, wherein said mobile terminal supports a UMTS network and a GSM network.

**Patentansprüche**

**1.** Verfahren für die Zeitsynchronisation von wenigstens zwei Funkzugangsmodulen (2, 6) eines mobilen Multimodus-Kommunikationsendgeräts, das in Übereinstimmung mit wenigstens zwei verschiedenen Funkzugangstechniken in einem Zellentelekommunikationsnetz arbeiten kann, in dem eines der Funkzugangsmodule in einer momentanen Zelle aktiv ist und das andere Funkzugangsmodul in der momentanen Zelle in einem passiven Zustand ist, wobei das Verfahren die folgenden Schritte umfasst:

(a) für jede Zelle, die zu der momentanen Zelle benachbart ist, Messen eines Zeitversatzes $T_{offset}$ zwischen dem Beginn eines bestimmten Rahmens der ersten Funktechnik und einem Beginn eines bestimmten Rahmens der zweiten Funkzugangstechnik; und
(b) Verwenden des Zeitversatzes $T_{offset}$, der im Schritt (a) gemessen wird, um das passive Funkzugangsmodul mit dem aktiven Funkzugangsmodul zu synchronisieren,

**dadurch gekennzeichnet, dass** das Verfahren ferner einen Schritt des Aktivierens des passiven Funkzugangsmoduls von dem aktiven Funkzugangsmodul aus umfasst,
wobei die Aktivierung des passiven Funkzugangsmoduls unmittelbar vor den Messungen an Zellen, die zu der momentanen Zelle benachbart sind, erfolgt.

**2.** Verfahren nach Anspruch 1, das den Schritt des Aktualisierens eines Wertes des Versatzes $T_{offset}$ bei jeder Änderung der momentanen Zelle und für jede benachbarte Zelle, der die Funkzugangstechnik des passiven Moduls zugeordnet ist, umfasst.

**3.** Verfahren nach Anspruch 1 oder 2, wobei das mobile Endgerät ein UMTS/GSM-Dualmodus-Endgerät ist und wobei die im Voraus definierte Dauer $T_{offset}$ eine Zeitdifferenz ist, die in einer GSM-Zelle beobachtet wird.

**4.** Vorrichtung für die Zeitsynchronisation von wenigstens zwei Funkzugangsmodulen (2, 6) eines mobilen Multimodus-Kommunikationsendgeräts, das in Übereinstimmung mit wenigstens zwei verschiedenen Funkzugangstechniken in einem Zellentelekommunikationsnetz arbeiten kann, in dem eines der Funkzugangsmodule in einer momentanen Zelle aktiv ist und das andere Funkzugangsmodul in der momentanen Zelle in einem passiven Zustand ist, wobei die Vorrichtung umfasst:

eine Einrichtung zum Messen eines Zeitversatzes Toffset zwischen dem Beginn eines bestimmten Rahmens der ersten Funktechnik und dem Beginn eines bestimmten Rahmens der zweiten Funkzugangstechnik; und
eine Einrichtung zum Synchronisieren des passiven Funkzugangsmoduls mit dem aktiven Funkzugangsmodul unter Verwendung des Zeitversatzes Toffset,
**dadurch gekennzeichnet, dass** das aktive Funkzugangsmodul so beschaffen ist, dass es das passive Funkzugangsmodul aktivieren kann, wobei die Aktivierung des passiven Zugangsmoduls unmittelbar vor den Messungen an Zellen, die zu der momentanen Zelle benachbart sind, erfolgt.

**5.** Mobiles Multimodus-Kommunikationsendgerät, das umfasst:

ein Funkzugangsmodul (2, 6), das für jede Betriebsart geeignet ist;
einen Taktgenerator (4, 8), der jedem Funkzugangsmodul zugeordnet ist; und
eine Einheit (18) zum Berechnen eines Zeitversatzes $T_{offset}$ zwischen dem Beginn eines bestimmten Rahmens einer ersten Betriebsart und dem Beginn eines bestimmten Rahmens einer zweiten Betriebsart in einem Zellentelekommunikationsnetz,
wobei das mobile Endgerät eine zentrale Schnittstelle (20) umfasst, die ein Taktsignal eines passiven Funkzugangsmoduls erzeugen kann, das in Bezug auf ein Taktsignal eines aktiven Funkzugangsmoduls um die Dauer $T_{offset}$ verschoben ist,
**dadurch gekennzeichnet, dass** das aktive Funkzugangsmodul so beschaffen ist, dass es das passive Funkzugangsmodul über die zentrale Schnittstelle aktivieren kann, wobei die Aktivierung des passiven Zugangsmoduls unmittelbar vor dem Berechnen des Zeitversatzes $T_{offset}$ erfolgt.

**6.** Mobiles Endgerät nach Anspruch 5, wobei die zentrale Schnittstelle ein Modul zum Erzeugen eines Befehls zum Aktivieren des passiven Funkzugangsmoduls umfasst.

**7.** Mobiles Endgerät nach Anspruch 5 oder 6, wobei das mobile Endgerät ein UMTS-Netz und ein GSM-Netz unterstützt.

**Revendications**

**1.** Procédé de synchronisation temporelle d'au moins deux modules d'accès radio (2, 6) d'un terminal mobile de communication multimode capable de fonctionner selon au moins deux techniques d'accès radio distinctes dans un réseau de télécommunication cellulaire dans lequel un desdits modules d'accès radio est actif dans une cellule courante et l'autre module d'accès radio est dans un état passif dans ladite cellule courante, ledit procédé comprenant les étapes consistant à :

(a) mesurer pour chacune des cellules adjacentes à la cellule courante un décalage temporel $T_{offset}$ entre le début d'une trame spécifique de la première technique d'accès radio et le début d'une trame spécifique de la seconde technique d'accès radio ; et
(b) utiliser le décalage temporel $T_{offset}$ mesuré à l'étape (a) pour synchroniser le module d'accès radio passif avec le module d'accès radio actif, **caractérisé en ce que** ledit procédé comprend en outre une étape consistant à activer le module d'accès radio passif à partir du module d'accès radio actif,

dans lequel l'activation du module d'accès passif est effectuée immédiatement avant les mesures sur les cellules adjacentes à la cellule courante.

**2.** Procédé selon la revendication 1, comprenant une étape consistant à mettre à jour une valeur du décalage $T_{offset}$ à chaque changement de la cellule courante et pour chaque cellule voisine associée à la technique d'accès radio du module passif.

**3.** Procédé selon les revendications 1 ou 2, dans lequel le terminal mobile est un terminal bimode UMTS/GSM et dans lequel la durée prédéfinie $T_{offset}$ est une différence de temps observée sur une cellule GSM.

**4.** Dispositif pour la synchronisation temporelle d'au moins deux modules d'accès radio (2, 6) d'un terminal mobile de communication multimode capable de fonctionner selon au moins deux techniques d'accès radio distinctes dans un réseau de télécommunication cellulaire, dans lequel un desdits modules d'accès radio est actif dans une cellule courante et l'autre module d'accès radio est dans un état passif dans ladite cellule courante, ledit dispositif comprenant :

des moyens pour mesurer un décalage temporel $T_{offset}$ entre le début d'une trame spécifique de la première technique d'accès radio et le début d'une trame spécifique de la seconde technique d'accès radio ; et
des moyens pour synchroniser le module d'accès radio passif avec le module d'accès radio actif à l'aide du décalage temporel $T_{offset}$,
**caractérisé en ce que** le module d'accès radio actif est adapté pour activer le module d'accès radio passif, où l'activation du module d'accès passif est effectuée immédiatement avant les mesures sur les cellules adjacentes à la cellule courante.

**5.** Terminal mobile de communication multimode comprenant :

un module d'accès radio (2, 6) dédié à chaque mode de fonctionnement ;
un générateur d'horloge (4, 8) associé à chaque module d'accès radio ; et
une unité (18) pour calculer un décalage temporel $T_{offset}$ entre le début d'une trame spécifique d'un premier mode de fonctionnement et le début d'une trame spécifique d'un second mode de fonctionnement dans un réseau de télécommunication cellulaire,
où ledit terminal mobile comprend une interface centrale (20) capable de générer un signal d'horloge d'un module d'accès radio passif décalé par rapport à un signal d'horloge d'un module d'accès radio actif concernant ladite durée $T_{offset}$,

**caractérisé en ce que** le module d'accès radio actif est adapté pour activer le module d'accès radio passif via l'interface centrale, et où l'activation du module d'accès passif est faite immédiatement avant de calculer le décalage temporel $T_{offset}$.

6. Terminal mobile selon la revendication 5, dans lequel ladite interface centrale comprend un module pour générer un ordre pour activer le module d'accès radio passif.

7. Terminal mobile selon les revendications 5 ou 6, dans lequel ledit terminal mobile supporte un réseau UMTS et un réseau GSM.

FIG. 1

FIG. 2

24

26

19.2 MHz
CLOCK

UTRA FRAME INT
START

UTRA FRAME INT
STOP

## FIG. 3

2 (14)      20      6      16      18

| UTRA CARD | CCU | GSM CARD | GTU | OTU |

30

32

34

36

38

40

42

50

52

54

56

58

60

62

## FIG. 4

## REFERENCES CITED IN THE DESCRIPTION

### Patent documents cited in the description

- FR 2826825 A
- FR 2826813 A